# EUROPEAN PATENT APPLICATION

(11) **EP 1 560 382 A1**
(43) Date of publication of application: **03.08.2005**
(21) Application number: 05250393.5
(22) Date of filing: 26.01.2005
(51) Int. Cl.: H04L 12/56, H04L 29/06

(54) **System for setting a communications transfer policy**

(30) Priority: 30.01.2004 JP 2004022651
(71) Applicant: Kabushiki Kaisha Toshiba, Tokyo 105-8001 (JP)
(72) Inventor: Yoneyama, Seijiro, IP Division, Toshiba Corp., Tokyo 105-8001 (JP); Ozaki, Satoshi, IP Division, Toshiba Corp., Tokyo 105-8001 (JP); Kozakai, Yasayuki, IP Division, Toshiba Corp., Tokyo 105-8001 (JP)
(74) Representative: Granleese, Rhian Jane

(57) **Abstract**

A communications apparatus (1) communicating with a communications destination apparatus using a communications controller includes a communications unit (15) to communicate with the communications destination apparatus, a database (12) to store a control rule according to which the communications controller controls communications between the communications apparatus (1) and the communications destination apparatus, and an informer (14) to inform the communications controller of the control rule stored in the database (12) (S11) to register the control rule in the communications controller (S12).

## Description

The present invention relates to a communications apparatus communicating with communications destination apparatuses, a communications controller to control communications between the apparatuses, and a communication system including them.

By introduction of the IPv6 that is a future generation technique, a communications configuration of Internet shifts to end-to-end communications, and implementation of a security in each communication channel is actualized.

As a method to realize a security in a communications channel is a firewall (refer to, for example, In IETF Internet Drafts Firewalling Considerations for IPv6, October, 2003). The firewall has functions for managing a communications transfer policy of a router on a communications channel and intercepting the communications which do not fit the communications transfer policy to protect a group of communications apparatuses connected to a network managed by the firewall from non-appropriate communications or service halt attack (DoS: Denial of Service) on Internet.

It is possible to provide a high grading and strong communication interception function to each group of communications apparatuses by setting a communications transfer policy based on a communications feature of the each group of communications apparatuses connected to a network managed by a firewall.

However, conventionally, a development vendor of a communications apparatus that grasps a feature of communications of the communications apparatus differs from a development vendor of a communications apparatus on which a firewall function is installed. Therefore, in the case of a communications transfer policy to be registered to the communications apparatus having a firewall function, an administrator must grasp a feature of communications of the communications apparatus, project the communications transfer policy, and set it. As a result, there is a problem that the administrator suffers a heavy workload according to the number of groups of communications apparatuses. In addition, since the administrator cannot grasp a communications transfer policy based on the communications feature that the vendor classifies and which is not described in an equipment manual and the like, there is a problem that grading of the communications transfer policy deteriorates.

As described above, in a communications apparatus for managing intensively communications transfer policies of a wide variety of communications apparatuses in a certain domestic Internet environment, it is difficult for each communications apparatus to cope with various requests of communications apparatuses.

An object of the present invention is to provide a communications apparatus that reflects a communications transfer policy based on request of each communications apparatus to a communications controller, the communications controller, and a communications system.

An aspect of the present invention provides a communications apparatus communicating with a communications destination apparatus using a communications controller comprises: a communications unit configured to communicate with the communications destination apparatus; a memory to store a control rule according to which the communications controller controls communications between the communications apparatus and the communications destination apparatus; and an informer to inform the communications controller of the control rule stored in the memory to register the control rule in the communications controller.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a diagram showing a network configuration of a communications system concerning an embodiment according to the present invention;
FIG. 2 is a diagram showing a configuration example of a communications apparatus concerning the embodiment;
FIG. 3 is a diagram showing a configuration example of a communications controller concerning the embodiment;
FIG. 4 is a diagram showing an example of a communications transfer policy;
FIG. 5 is a diagram showing an example of another communications transfer policy;
FIG. 6 is a diagram showing an example of further another communications transfer policy;
FIG. 7 is a diagram of explaining an operation of the embodiment;
FIG. 8 is a diagram of explaining an operation of the embodiment;
FIG. 9 is a diagram of explaining an operation of the embodiment;
FIG. 10 is a diagram of explaining an operation of the embodiment;
FIG. 11 is a diagram of explaining an operation of the embodiment; and
FIG. 12 is a diagram of explaining an operation of the embodiment.

There will now be described an embodiment of the present invention referring to drawings.

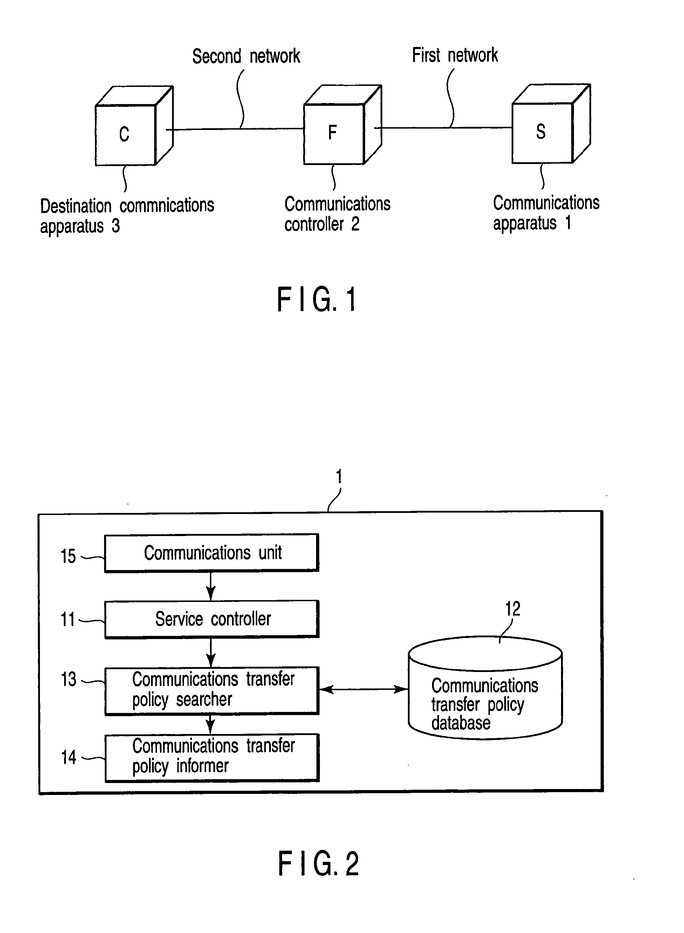

FIG. 1 shows a network configuration example of a communications system related to an embodiment of the present invention. As shown in FIG. 1, the network includes a communications apparatus 1 connected to a first network, a communications controller 2 connected to the first and second networks, and a communications destination apparatus 3 (having communications function) connected to the second network.

FIG. 1 shows only one communications apparatus 1, but a plurality of communications apparatuses may be on the first network. Similarly, a plurality of communication destination apparatuses 3 may be provided on the second network. The first network is, for example, LAN in a company or LAN in a home, and the second network is an external network of, for example, the LAN in a company or LAN in a home, and Internet as a representative example.

The communications apparatus 1 connected to the first network communicates with the communications destination apparatus 3 on the second network through the communications controller 2 installing a firewall function and existing on the first network. The communications apparatus 1 may be a personal computer, an information home electric appliances machine, or a data processing unit.

The communications controller 2 is a controller installing a so-called firewall function, and manages intensively the communications transfer policy notified by the communications apparatus 1 on the first network. It stores and controls a notified communications transfer policy corresponding to information for identifying the communications apparatus 1 notified the controller of the communications transfer policy.

FIG. 2 shows a configuration example of the communications apparatus related to the embodiment of the present invention. As shown in FIG. 2, the communications apparatus 1 comprises a service controller 11, a communications transfer policy database 12, a communications transfer policy searcher 13, a communications transfer policy informer 14, and a communications unit 15.

The communications unit 15 communicates with the communications destination apparatus 3 on the second network through the communications controller 2 on the first network. The communications destination apparatus 3 may be any kind of configuration. The service controller 11 controls a communications service provided when the communication apparatus 1 communicates with the communications destination apparatus 3. The communications transfer policy database 12 stores a group of communications transfer policies (one or more communications transfer policies). For example, the communications transfer policy database 12 stores the communications transfer policies corresponding to information indicating intended uses. In this case, the communications transfer policy database 12 may store a startup communications transfer policy informed in a startup of the communications apparatus 1 and a communications transfer policy for specific communications service notified at the start of a specific communications service (in this case, the number of the communications transfer policies may be 0, 1 or two or more).

The communications transfer policy searcher 13 searches the communications transfer policy database 12 for the communications transfer policy to be notified to the communications controller 2 according to an intended use thereof at the time. In the concrete example, when the service controller 11 detects a startup of the communications apparatus 1, it searches the database 12 for a startup communications transfer policy. When it detects a start of the first communications service (for example, HTTP service), it searches the database 12 for a communications transfer policy for the first communications service. When it detects a start of the n-th communications service (for example, FPT service), it searches the database for a communications transfer policy for the n-th communications service. The communications transfer policy informer 14 informs the communications controller 2 of the communications transfer policy searched with the communications transfer policy searcher 13 through the first network.

At least some or all of the service controller 11, the communications transfer policy database 12, the communications transfer policy searcher 13, the communications transfer policy informer 14 and the communications unit 15 may be configured as a hardware or software executed on the communications apparatus 1. In the latter case, they may be realized by software referred to as a daemon in a UNIX (TM) system OS, for example.

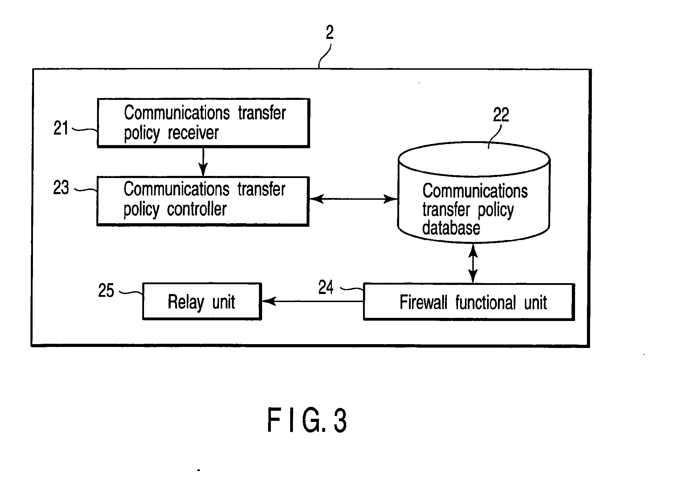

FIG. 3 shows a configuration example of the communications controller 2 comprising a firewall function managing intensively communications transfer policies related to the embodiment of the present invention. As shown in FIG. 3, the communications controller 2 comprises a communications transfer policy receiver 21, a communications transfer policy database 22, a communications transfer policy controller 23, a firewall function unit 24, and a relay unit 25.

The relay unit 25 communicates with the communications destination apparatus 3 (becoming a communications destination of the communications apparatus 1) on the second network. In relay, when the communications are performed by transfer of a packet, the packet received from the communications apparatus 1 via the first network is relayed to the communications destination apparatus 3 via the second network. Alternatively, the packet received from the communications destination apparatus 3 via the second network is relayed or transferred to the communications apparatus 1 via the first network.

The communications transfer policy receiver 21 receives a communications transfer policy from the communications apparatus 1 (that is, the communications transfer policy informer 14) through the first network. The communications transfer policy database 22 stores intensively the communications transfer policies of a plurality of communications apparatuses 1. For example, it stores the notified communications transfer policy corresponding to information for identifying the communications apparatus 1 notified it.

The communications transfer policy controller 23 newly registers the communications transfer policy that the communications transfer policy receiver 21 receives from the communications apparatus 1 to a communications transfer policy database 22, when the communications transfer policy is not memorized in the communications apparatus 1, or updates it, when the communications transfer policy is memorized in the communications apparatus 1.

The firewall function unit 24 controls communications according to the communications transfer policy stored corresponding to the communications apparatus 1 concerning the communications, the communications transfer policy being one of the communications transfer policies stored in the communications transfer policy database 22 corresponding to the communications apparatuses (realizes the so-called firewall function), when the relay unit 25 relays the communications between the communications apparatus 1 on the first network and the communications partner apparatus 3 on the second network. For example, in the case that the communications are done by transfer of a packet, when the firewall function unit 24 receives a packet concerning the communications, it determines whether or not the packet should be passed according to the communications transfer policy. If the firewall function unit 24 determines to pass the packet, it makes the relay unit 25 transfer the packet. If the firewall function unit 24 determines to block the transfer of packet, it makes the relay unit 25 discard the packet. The firewall function unit 24 determines whether or not the history of transfer of the packet should be recorded according to the communications transfer policy. If the firewall function unit 24 determines to record the history, it records the history. In this way, the firewall function unit 24 does various kinds of control.

In addition, the communications transfer policy can be used by being divided into three kinds, that is, a first kind to be applied to only communication from the communications destination apparatus 3 on the second network to the communications apparatus 1 on the first network, a second kind to be applied to only communication from the communications apparatus 1 on the first network to the communications destination apparatus 3 on the second network, and a third kind to applied to bidirectional communications between the communications apparatus 1 and the communications destination apparatus 3. In this case, there is, for example, a method of adding, to the communications transfer policy, information for identifying whether the communications transfer policy belongs to either one of the first to third kinds. For example, in the case that only the communications transfer policy of the first kind is stored in the communications controller 2 of a certain communications apparatus 1, the communication controller 3 executes a communications control only when the communications controller 2 receives a packet from the communications destination apparatus 3 on the second network to the communications apparatus 1 on the first network.

A part or all of the communications transfer policy receiver 21, the communications transfer policy database 22, the communications transfer policy controller 23, the firewall function unit 24 and the relay unit 25 may be configured as hardware, and may provide a function as software executed by the communications controller 2. In the latter case, it may be realized as software referred to as a daemon, for example, a UNIX (TM) system OS.

There will be described the communications transfer policy hereinafter.

Various kinds of communications transfer policies can be defined. For example, a policy prescribing information concerning the packet received by the communications controller 2 and subjected to specific determination such as pass (or blocking) of relay of the packet, a policy prescribing the property of the packet to be subjected to the specific determination, and a policy prescribing an upper limit of an available communications band. The communications transfer policy may include a list of a plurality of communications transfer policies.

A concrete example of a commutations policy concerning pass / blocking of relay is as follows (of course, the following policy can use for determination other than the pass / blocking of relay.

Designate "a transport layer protocol concerning a TCP/IP model" related to the packet that the relay should be passed.

Designate "the port number concerning a TCP/IP model" related to the packet that the relay should be passed.

Designate "species of one or more IP version 6 Extension headers" to be included in the packet that the relay should be passed.

Designate "species of one or more IP version 6 Extension headers and the order thereof" to be included in the packet that the relay should be passed.

Designate "species of IP version 6 Options header" related to the packet that the relay should be passed.

Designate "species of IP version 6 Options header and the order thereof" related to the packet which the relay should be permitted.

Designate "Security Parameter Index in IPsec protocol" related to the packet that the relay should be passed.

Designate "distinction whether a mode in an IPsec protocol is a transport mode or a tunnel mode" related to the packet that the relay should be passed.

Designate "a cryptograph algorithm and/or authentication algorithm in an IPsec protocol" related to the packet that the relay should be passed.

Designate "species of DoS: Denial of Service on Internet" related to the packet that the relay should be passed when the second network is Internet.

Designate "a destination IP address and/or an source IP address" related to the packet that the relay should be passed.

Designate "an upper limit of packet length" related to the packet that the relay should be passed.

Designate "an upper limit of communications band used for communications to be controlled.

An operation procedure of the present embodiment is described with reference to FIGS. 1 to 3. Assuming that the communications apparatus 1 is referred to as a communications apparatus C, the communications controller 2 of FIG. 3 to as a communications controller F, and the communications destination apparatus 3 to as a communications destination apparatus C.

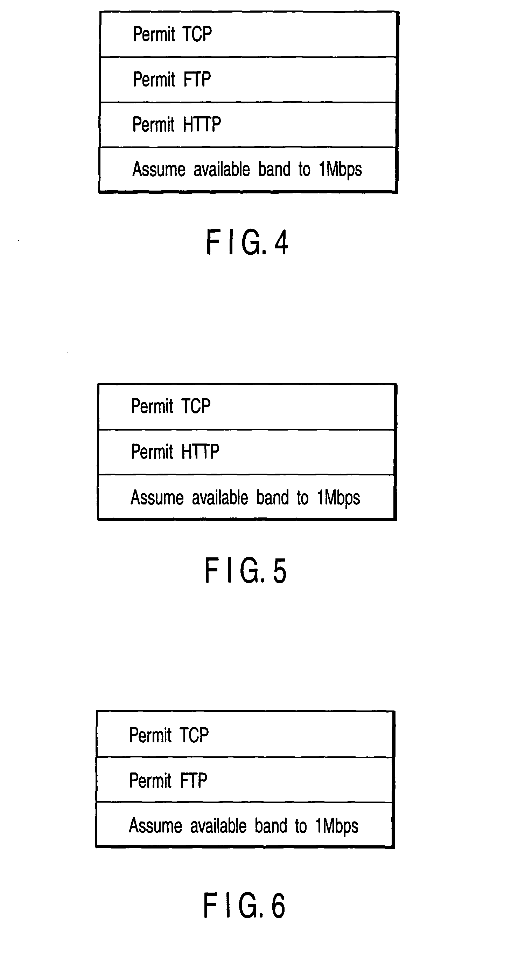

There will be described an example that the communications apparatus S starts a FTP communications after it provides a HTTP service to the communications destination apparatus. The communications apparatus S notifies the communications controller F of a startup communications transfer policy as illustrated in FIG. 4 in starting, notify the communications controller F of a communications transfer policy for HTTP service as illustrated in FIG. 5 at the start of HTTP service, and notify the communications controller F of a communications transfer policy for FTP service as illustrated in FIG. 6 at the start of FTP. In this example, each communications transfer policy is managed as separate tables, but all communications transfer policies may be integrally managed.

The communications controller F receives a communications transfer policy notified by the communications apparatus S as described above, and comprises a function to update a firewall function in dynamic thereby. It is considered to reflect to a firewall function a communications transfer policy to be notified from communications apparatus S to the communications controller F between the communications apparatus S and the communications controller F. A procedure to reflect a communications transfer policy to a firewall function between the communications apparatus S and the communications controller F is explained as an example. This can apply to setting the firewalling in a conventional TCP/IP communication.

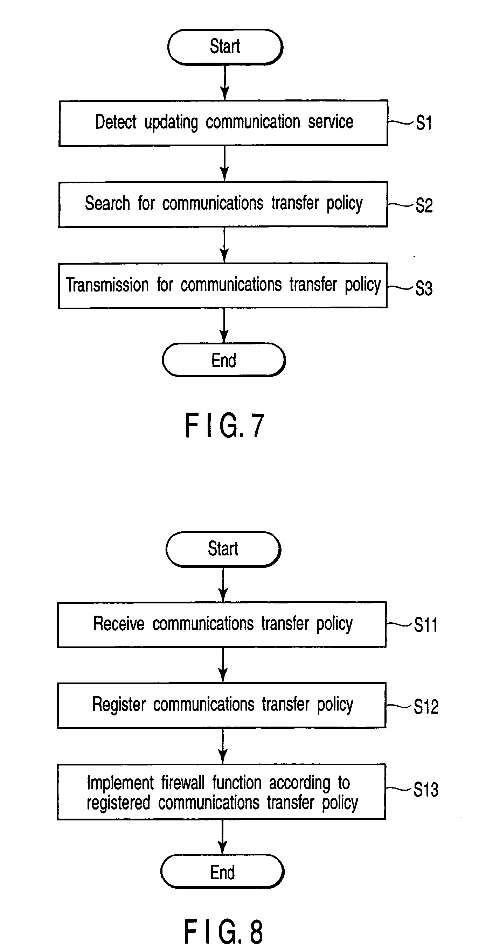

FIG. 7 shows an example of routine according to the communications apparatus 1 of the present embodiment. In addition, FIG. 8 shows an example of a process routine according to the communications controller 2 of the present embodiment.

The communications apparatus S stores in the communications transfer policy database 12 a startup communications transfer policy (FIG. 4) for limiting to communications contents necessary for starting the communications apparatus S when the development vender ships the communications apparatus S, a HTTP service communications transfer policy (FIG. 5) for limiting to communication contents based on a HTTP service, and a FTP service communications transfer policy (FIG. 6) for limiting to communications contents based on a FTP service.

In the communications apparatus S, the service controller 11 detects a startup of the communications apparatus S (step S1). A transfer program for notifying the communications controller 3 of the startup communications transfer policy may be executed at the time of starting the communications apparatus instead of detecting a startup of the communications apparatus S. Also, a program for notifying the service controller 11 of completion of the startup may be executed at the time of starting the communications apparatus.

In the communications apparatus S, the communications transfer policy searcher 13 searches the communications transfer policy database 12 for a startup transfer policy (FIG. 4) (step S2).
The communications transfer policy informer 14 informs a searched startup communications transfer policy of the communications controller F (step S3).

In the communications controller F, the communications transfer policy receiver 21 receives the communications transfer policy that the communications apparatus S informs of (step S11). The communications transfer policy controller 23 registers a received startup communications transfer policy in the communications transfer policy database 22 (referred to as a new registration here) (step S12).

The firewall function unit 24 executes the firewall function that reflects the registered startup communications transfer policy in the communications apparatus F (step S13). In the communications apparatus S, the service controller 11 detects that the communications apparatus S starts an offer of a HTTP service (step S1).

Detection of start of each service may be done by always watching the start of service (for example, pick up it with an OS level). Instead of detecting the start of each service, a process to notify the communications controller 3 of the service communications transfer policy or a process to notify the service controller 11 of completion of the start of service may be executed at the start of each service.

A firewall function for limiting to the communications contents necessary for the startup of the communications apparatus S can be provided in the communications apparatus F. As a result, at starting, it is possible to intercept the communications that do not fit the communications transfer policy of FIG. 4 in the communications apparatus F, and protect the communications apparatus S from a non-appropriate communication or DoS (Denial of Service). In this time, since the communications transfer policy with high grading based on knowledge of the development vender of the communications apparatus S is reflected, security of high quality can be realized.

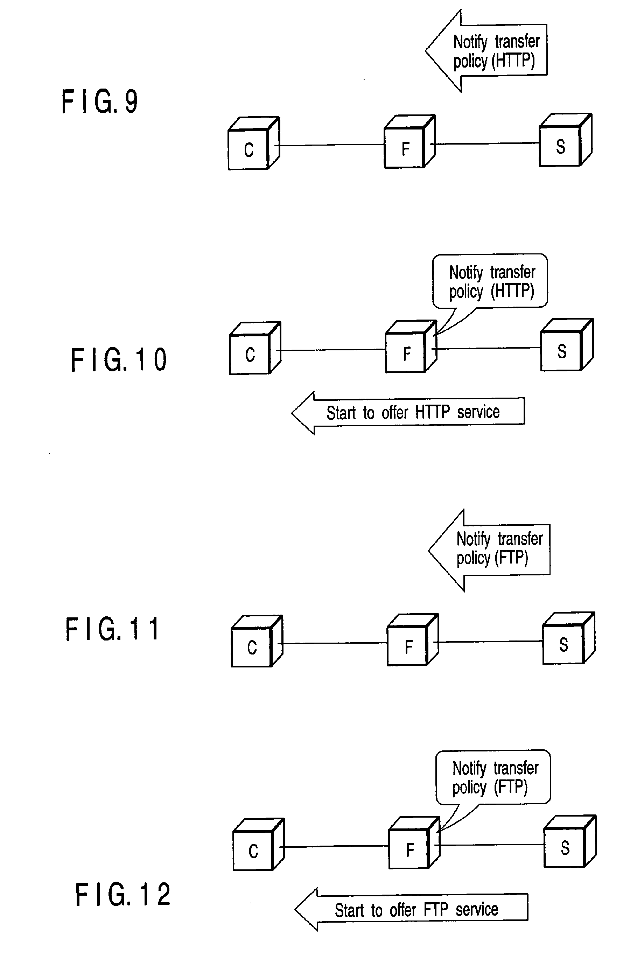

In the communications apparatus S, the communications transfer policy searcher 13 searches the communications transfer policy database 12 for a HTTP service communications transfer policy (FIG. 5) (step S2). The communications transfer policy informer 14 informs the communications controller F of the HTTP service communications transfer policy (step S3) (refer to FIG. 9).

In the communications controller F, the communications transfer policy receiver 21 receives the HTTP service communications transfer policy that the communications apparatus S informs of (step S11). The communications transfer policy controller 23 updates the HTTP service communications transfer policy in the communications transfer policy database 22 (step S12) (refer to FIG. 10). The firewall function unit 24 executes the firewall function that reflects the registered HTTP service communications transfer policy (step S13).

By the above arrangement, the communications apparatus F can provide a firewall function to limit to communications contents based on the HTTP service that the communications apparatus S provides. As a result, it is possible to intercept the communications which do not fit the communications transfer policy of FIG. 5 in the communications apparatus F, and protect the communications apparatus S from a non-appropriate communication or DoS (Denial of Service). In this time, since the communications transfer policy with high grading based on knowledge of the development vender of the communications apparatus S is reflected, security of high quality can be realized.

In the communications apparatus S, the service controller 11 detect that the communications apparatus S finishes the HTTP service and starts an offer of FTP service (step S1). The communications transfer policy searcher 13 searches the communications transfer policy database 12 for a FTP service communications transfer policy (FIG. 6) (step S2). The communications transfer policy unit 14 notifies the communications apparatus F of the searched FTP service communications transfer policy (step S3) (refer to FIG. 11).

In the communications apparatus F, the communications transfer policy receiver 21 receives the FTP service communications transfer policy that the communications apparatus S notifies of (step S11). The communications transfer policy controller 23 updates the FTP service communications transfer policy in the communications transfer policy database 22 (step S12) (refer to FIG. 12). The firewall function unit 24 executes the firewall function that reflects the updated FTP service communications transfer policy (step S13). As a result, the effect as explained in the case of the HTTP service can be obtained.

According to the above embodiment, the communications apparatus F can provide a firewall function to update dynamically the communications transfer policy corresponding to ever-changing communications contents based on the service that the communications apparatus S offers.

In the above embodiment, the communications apparatus 1 informs the communications controller 3 of the communications transfer policy at the time of startup and the time of start of each service. However, it may be configured to notify the communications controller 3 of the communications transfer policy only at the time of startup. On the contrary, the communications apparatus 1 may be configured to notify the communications controller 3 of the communications transfer policy only at the time of start of each service.

In addition, the communications apparatus 1 may be configured to notify the communications controller 3 of the communications transfer policy at another timing. Further, when the communications apparatus 1 notifies the communications controller 3 of the communications transfer policy, it may be done to notify the communications transfer policy of expiry information (life time).

When the communications apparatus 1 must newly register the communications transfer policy to the communications controller 3 or update the registration, the communications apparatus 1 may notify the communications controller 3 of registration instruction including the communications transfer policy. When the communications transfer policy should be deleted, the communications apparatus 1 may notify the communications controller 3 of deletion instruction. Further, they may be used together.

Each of the above functions may be described as software and executed by a computer having suitable mechanism.

The present embodiment can implement as a program for causing a computer to execute a predetermined procedure, for causing the computer to function as a predetermined measurement, or for causing the computer to realize a predetermined function. In addition, a computer readable recording medium storing the program is available. According to the present invention, it is possible to reflect the communications transfer policy based on request of each communications apparatus to the communications controller.

## Claims

1. A communications apparatus communicating with a communications destination apparatus using a communications controller, **characterized by** comprising:
communications means (15) for communicating with the communications destination apparatus;
memory means (12) for storing a control rule according to which the communications controller controls communications between the communications apparatus and the communications destination apparatus; and
informer means (14) for informing the communications controller (2) of the control rule stored in the memory to register the control rule in the communications controller.

2. The communications apparatus according to claim 1, **characterized in that** the memory means (12) is configured to store the control rule prescribing information to be included in a packet concerning the communications or a feature that the packet must has when the communications controller passes or blocks relay of the packet.

3. The communications apparatus according to claim 1, **characterized in that** the memory means (12) is configured to store the control rule including data representing an upper limit of a communications band to be passed in the communications between the communications apparatus and the communications destination apparatus

4. The communications apparatus according to claim 1, **characterized in that** the memory means (12) is configured to store the control rule including information for instructing only communications from the communications destination apparatus to the communications apparatus, only communications from the communications apparatus to the communications destination apparatus (3), or bidirectional communications between the communications apparatus (1) and the communications destination apparatus (3).

5. The communications apparatus according to claim 1, **characterized in that** the informer means (14) is configured to inform the communications controller (2) of the control rule in a startup of the communications apparatus.

6. The communications apparatus according to claim 1, **characterized in that** the memory (12) stores a first control rule to be notified to the communications controller (2) in a startup of the communications apparatus (2) and a second control rule inherent to a specific communications service to be notified to the communications controller (2) in a start of the specific communications service, and the informer means (14) is configured to inform the communications controller (2) of the second control rule every start of the specific communications service after the informer informs the communications controller (2) of the first control rule in a startup of the communications apparatus (1).

7. The communications apparatus according to claim 6, **characterized in that** the memory means is configured to store the second control including a control rule to admit only relay of a packet necessary for implementing the specific communications service.

8. The communications apparatus according to claim 1, **characterized in that** the informer means (12) is configured to inform the control rule including expiry information of the communications controller (2).

9. The communications apparatus according to claim 1, **characterized in that** the memory means (12) is configured to store a plurality of control rules, and the informer means is configured to inform the communications controller (2) of an registration instruction including the control rule when the control rule of the communications controller should be updated or newly registered, and a deletion instruction when the control rule of the communications controller should be deleted.

10. The communications apparatus according to claim 1, **characterized in that** the communications apparatus (1) is connected to a first network and communicates with the communications destination apparatus (3) connected to a second network through the communications controller (2) connected to the first network and the second network.

11. The communications apparatus according to claim 1, **characterized in that** the second network is Internet, and the memory means (12) is configured to store the control rule including designating species of denial of service on the Internet pertaining to a packet concerning the communications when the communications controller (2) passes or blocks relay of the packet.

12. A communications controller to control communications between a first communications apparatus and a second communications apparatus, **characterized by** comprising:
relay means (25) configured to relay communications between the first communications apparatus (1) and the second communications apparatus (3);
receiver means for receiving from the first communications apparatus (1) a control rule according to which the communications controller controls the communications;
memory means (22) for storing the control rule received by the receiver means, corresponding to information for identifying the first communications apparatus (1); and
communications control means (23) configured to control the communications according to the control rule stored in the memory means (22) when the relay means (25) relays communications concerning the first communications apparatus (1).

13. The communications controller according to claim 12, **characterized in that** the receiver means (21) is configured to receive the control rule prescribing information to be included in a packet concerning the communications or a feature that the packet must has when the communications controller (2) passes or denies relay of the packet.

14. The communications controller according to claim 13, **characterized in that** the receiver means (21) is configured to receive the control rule includes a rule prescribing species of a plurality of IP version 6 expansion header to be included in the packet and an order of the species, a rule prescribing species of a plurality of IP version 6 option header to be included in the packet and an order of the species, a rule prescribing a security parameter index in an IPsec protocol to be included in the packet, a rule prescribing which of a transport mode and a tunnel mode in an IP protocol relates to the packet, a rule prescribing a cryptograph algorithm and/or an authentication algorithm in an IPsec protocol, or a rule prescribing an upper limit of a packet length of the packet.

15. The communications controller according to claim 12, **characterized in that** the receiver means (21) is configured to receive the control rule including a rule prescribing an upper limit of a communications band to be permitted when the communications controller relays the packet concerning the communications.

16. The communications controller according to claim 12, **characterized in that** the relay means (21) is configured to relay communications between the first communications apparatus (1) connected to the first network and the second apparatus (3) connected to the second network.

17. The communications controller according to claim 16, **characterized in that** the second network is Internet, and the receiver means (21) is configured to receive the control rule including designating species of denial of service on the Internet pertaining to the packet concerning the communications when the communications controller (2) passes or blocks relay of the packet.

18. A communications system including a communications apparatus, a communications destination apparatus, and a communications controller,
**characterized in that** the communications apparatus (1) comprises:
communications means (15) configured to communicate with the communications destination apparatus;
first memory means (12) for storing a control rule according to which the communications controller (2) controls communications; and
informer means (14) for informing the communications controller (2) of the control rule stored in the first memory means (22); and
the communications controller (2) comprises:
relay means (25) configured to relay communications between the communications apparatus (1) and the communications destination apparatus (3);
receiver means (21) to receive the control rule from the communications apparatus (1);
second memory means (22) for storing the control rule received by the receiver means (21) in association with information identifying the communications apparatus (1); and
communications control means (23) configured to control the communications according to the control rule stored in the second memory means (22) when the relay unit relays the communications concerning the communications apparatus (1).
